# FASCICULE DE BREVET EUROPEEN

(11) **EP 4 436 841 B1**
(45) Date de publication et mention de la délivrance du brevet: **14.01.2026**
(21) Numéro de dépôt: 22813639.6
(22) Date de dépôt: 20.10.2022
(51) Int. Cl.: B60R 21/017, G07C 5/00, G08B 25/10, H04W 4/44, H04W 4/90, B60R 21/00

(54) **IMPLANTATION D'UNE BATTERIE DE SECOURS D'UN BOITIER DE CONNECTIVITÉ DANS UN VÉHICULE TERRESTRE À MOTEUR**
ANORDNUNG EINER NOTBATTERIE FÜR EINE ANSCHLUSSDOSE IN EINEM LANDKRAFTFAHRZEUG
ARRANGEMENT OF AN EMERGENCY BATTERY FOR A CONNECTIVITY BOX IN A LAND MOTOR VEHICLE

(30) Priorité: 24.11.2021 FR 2112429
(43) Date de publication de la demande: 02.10.2024
(73) Titulaire: Stellantis Auto SAS, 78300 Poissy (FR)
(72) Inventeur: SEREZAT, Laurent, 11510 Treilles (FR); FOURNIAT, Philippe, 75014 Paris 14 (FR); SANNA, Joseph, 68210 Dannemarie (FR)
(74) Mandataire: ESIP
(86) Numéro de dépôt international: PCT/FR2022/051982
(87) Numéro de publication internationale: WO 2023/094741

(56) Documents cités:
- EP-A1- 2 128 841
- WO-A1-2021/116559
- US-A1- 2016 176 443

## Description

La présente invention revendique la priorité de la demande française 2112429 déposée le 24.11.2021

La présente invention appartient au domaine de l'implantation physique de dispositifs de communication dans un véhicule terrestre à moteur. En particulier, elle concerne l'implantation d'une batterie de secours d'un boitier de connectivité d'un véhicule automobile. On entend par « véhicule terrestre à moteur » tout type de véhicule tel qu'un véhicule automobile, un cyclomoteur, un avion, un train, une motocyclette, un robot de stockage dans un entrepôt, etc.

Le boitier de connectivité est un dispositif en charge des communications entre le véhicule et au moins un réseau de télécommunication. Généralement, le boitier de connectivité communique via un réseau cellulaire, par exemple 4G ou 5G, vers des serveurs distants. Une fonction particulière du boitier de connectivité est d'émettre une communication d'urgence vers un centre d'appel d'urgence.

Lorsqu'un véhicule terrestre ou l'un des occupants de ce véhicule subit un incident, il peut être pertinent de mettre en œuvre la communication d'urgence, comportant typiquement un message d'urgence. La diversité des incidents pour lesquels un tel message est pertinent est grande : il peut s'agir d'un accident de la route impliquant le véhicule, d'un malaise d'un des passagers, d'un incident technique lié à un paramètre de fonctionnement du véhicule (tel qu'un blocage du régulateur adaptatif de vitesse), d'une agression d'un occupant du véhicule, etc.

Différentes modalités ont pu être proposées pour la transmission par un véhicule terrestre de tels messages d'urgence. On entend par « message d'urgence » tout type de communication impliquant une transmission d'information. Il peut par exemple s'agir de l'envoi d'un message comprenant des données numériques (binaires par exemple), tout type d'appel sur un réseau de télécommunication, une combinaison d'un appel et d'un message, etc.

En Europe, un message d'urgence habituellement utilisé est l' « eCall ». L'eCall est déclenché soit automatiquement par l'activation de capteurs embarqués, soit manuellement par les occupants du véhicule en détresse. Une fois activé, l'eCall avertit, au moyen des réseaux de communication sans fil, le centre d'appel d'urgence (PSAP, Public Safety Answering Point en anglais) le plus approprié et lui fournit des informations de localisation pertinentes, puis transmet un ensemble minimal de données (MSD, Minimum Set of Data en anglais) défini, signalant qu'un incident nécessitant une réponse des services d'urgence s'est produit, et établit une voie audio entre les passagers du véhicule et le PSAP le plus approprié.

La communication d'urgence devant être initié dans une situation impliquant potentiellement une destruction au moins partielle du véhicule, il est nécessaire de prévoir une source d'alimentation de secours pour que le boitier de connectivité puisse fonctionner même si une source d'alimentation principale (batterie 12 Volts par exemple) du véhicule est détruite. Une batterie de secours est ainsi prévue.

Il a pu être proposé d'implanter le boitier de connectivité sur le toit du véhicule ou dans le tableau de bord du véhicule. Toutefois, ces solutions présentent des inconvénients, notamment en termes de gestion thermique et d'inviolabilité.

Pour résoudre ces inconvénients, il a pu être proposé dans le document FR 2106178 d'intégrer le boitier de connectivité dans une console centrale située entre le siège conducteur et le siège passager du véhicule. L'implantation de la batterie de secours dans cette configuration est alors problématique.

US 2016/176443 A1 divulgue une structure d'installation pour un dispositif de véhicule.

La présente invention vient améliorer la situation.

A cet effet un premier aspect de l'invention concerne un véhicule terrestre à moteur comportant :
- un siège conducteur et un siège passager ;
- une console centrale comprise entre le siège conducteur et le siège passager ;
- un boitier de connectivité compris à l'intérieur de la console centrale ;
- une batterie de secours configurée pour alimenter le boitier de connectivité en énergie ;
- un support du boitier de connectivité fixé sur un plancher du véhicule et compris à l'intérieur de la console centrale ;
dans lequel le boitier de connectivité et le support sont configurés pour être fixés l'un à l'autre, et dans lequel le support comporte une platine configurée pour recevoir la batterie de secours.

Implanter la batterie de secours avec le boitier de connectivité présente différents avantages techniques.

D'une part, le câblage entre la batterie et le boitier est limité, les pertes d'énergie liées à ce câblage sont donc limitées.

D'autre part, le montage est simplifié car le même monteur (console centrale) centralise les branchements et fixations pour le boitier de connectivité. En particulier, la batterie de secours n'a pas à être montée à un autre moment dans la chaîne de montage.

Dans un mode de réalisation, la console centrale comporte en outre un conduit de climatisation, situé au-dessus du boitier de connectivité.

Dans un mode de réalisation, la batterie de secours est configurée pour que l'alimentation en énergie du boitier de connectivité par la batterie de secours génère suffisamment d'énergie pour que le boitier de connectivité transmette une communication d'urgence à un centre d'appel d'urgence.

Dans un mode de réalisation, la communication d'urgence est un message d'urgence comportant l'un au moins des éléments suivants :
- une localisation du véhicule ;
- un type du véhicule.

Un deuxième aspect de l'invention concerne un procédé d'émission d'une communication d'urgence depuis un véhicule terrestre à moteur selon le premier aspect de l'invention, comportant les étapes de :
- Détection d'un défaut de fonctionnement d'une source d'alimentation principale du véhicule ;
- Initialisation de la communication d'urgence à partir d'une énergie obtenue de la batterie de secours.

D'autres caractéristiques et avantages de l'invention apparaîtront à l'examen de la description détaillée ci-après, et des dessins annexés sur lesquels :
[Fig 1] est un schéma illustrant un support de boitier de connectivité selon un mode de réalisation de l'invention ;
[Fig 2] est un schéma illustrant un boitier de connectivité et son support selon un mode de réalisation de l'invention ;
[Fig 3] est un schéma illustrant un boitier de connectivité et un conduit de climatisation selon un mode de réalisation de l'invention ;
[Fig 4] est un schéma illustrant un dispositif pour mettre en œuvre les étapes du procédé selon un mode de réalisation de l'invention.

L'invention est décrite ci-après dans son application, non limitative, au cas d'un boitier de connectivité implanté dans une console centrale d'un véhicule automobile. D'autres applications, telles qu'un boitier de connectivité implanté dans une console centrale d'un camion ou d'un avion sont également envisageables.

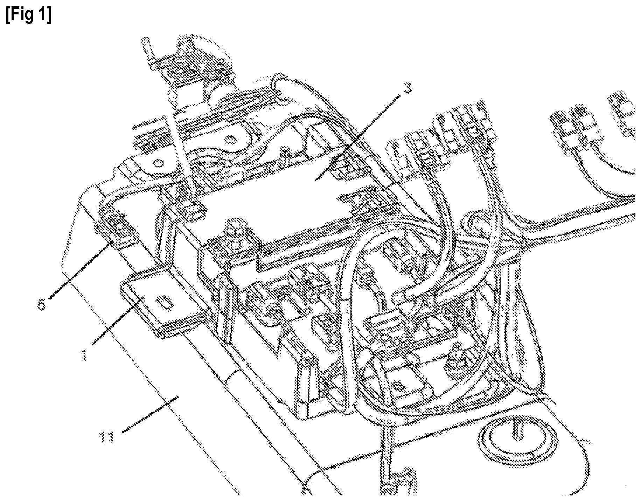

La **figure 1** est un schéma illustrant un support de boitier de connectivité selon un mode de réalisation de l'invention.

La figure 1 comporte une vue en perspective d'un plancher 11 du véhicule automobile, sur lequel est fixé un support 3 d'un boitier de connectivité (non représenté à la figure 1). La fixation du support sur le plancher est typiquement assuré par vissage. Le support 3 comporte une platine 1 configurée pour recevoir une batterie de secours (non représentée) configurée pour alimenter le boitier de connectivité en énergie.

Le support est en outre configuré pour être fixé au boitier de connectivité. Les moyens de fixation sont par exemple décrits dans le document FR 2106178, et comportent typiquement des ergots, encoches et contre-appuis pour un pré-montage, la fixation étant ensuite sécurisée par vissage.

Des faisceaux sont également représentés sur la figure 1, et notamment un câble 4 configuré pour relier la batterie de secours au boitier de connectivité.

L'ensemble illustré par la figure 1 est compris à l'intérieur d'une console centrale (non représentée) située entre un siège conducteur et un siège passager.

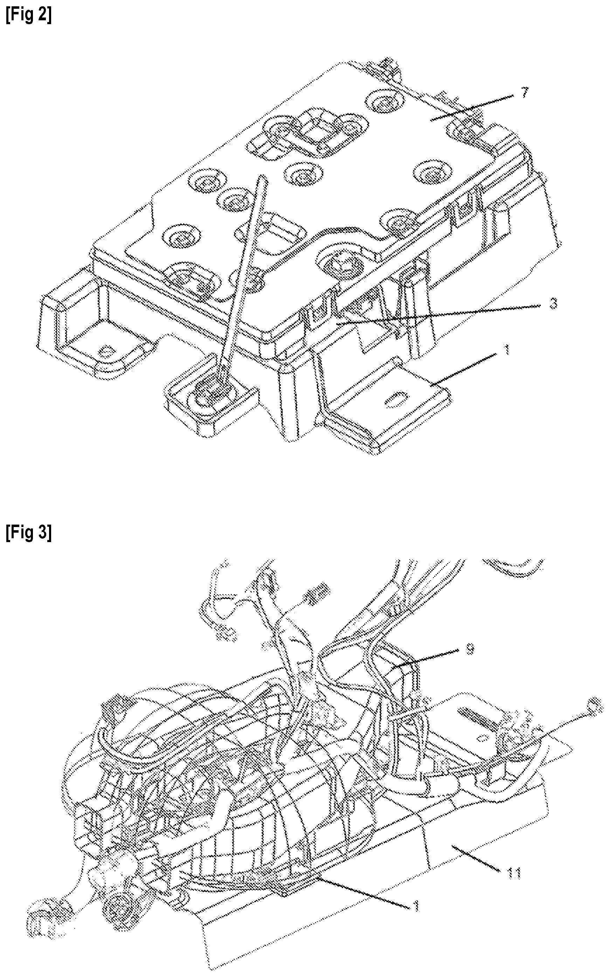

La figure 2 est un schéma illustrant le boitier de connectivité et son support selon un mode de réalisation de l'invention.

Le boitier de connectivité 7 est fixé sur le support 3, comportant la platine 1 pour la batterie de secours (non représentée).

Dans un mode de réalisation, la batterie de secours est configurée pour que l'alimentation en énergie du boitier de connectivité par la batterie de secours génère suffisamment d'énergie pour que le boitier de connectivité transmette une communication d'urgence à un centre d'appel d'urgence. En particulier, dans un mode de réalisation, la communication d'urgence est un message d'urgence comportant l'un au moins des éléments suivants :
- une localisation du véhicule ;
- un type du véhicule.

La communication d'urgence est par exemple de type eCall, tel que décrit en introduction de la présente demande.

La figure 3 le boitier de connectivité et un conduit de climatisation selon un mode de réalisation de l'invention.

Le conduit de climatisation 9 est situé au-dessus du boitier de connectivité lui-même fixé au-dessus du support comportant la platine 1, le support étant lui-même fixé au plancher 11. Sur la figure 3, le conduit de climatisation est représenté partiellement transparent, de sorte que le boitier de connectivité est également visible.

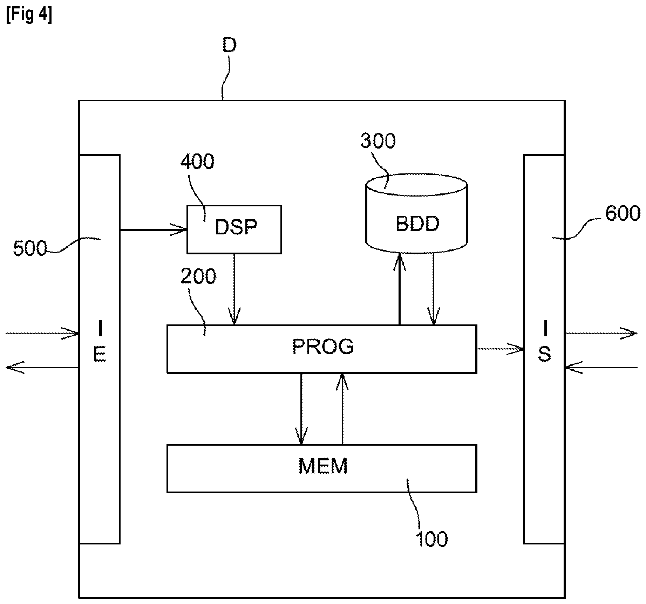

La figure 4 représente un exemple de dispositif D compris dans le véhicule. Dans un mode de réalisation, le dispositif D est compris dans le boitier de connectivité. Ce dispositif D peut être utilisé en tant que dispositif centralisé en charge des étapes d'un procédé d'émission d'une communication d'urgence depuis le véhicule terrestre à moteur décrit ci-avant en référence aux figures 1 à 3.

En particulier, le procédé comporte les étapes de :
- Détection d'un défaut de fonctionnement d'une source d'alimentation principale du véhicule. La détection est par exemple mise en œuvre lors d'un fonctionnement en continu du boitier de connectivité, le boitier détectant une rupture d'alimentation et envoyant alors une requête d'activation de la batterie de secours. Il est également possible que la batterie de secours ne soit pas active tant qu'elle détecte que la boitier de connectivité est correctement alimenté par une source d'alimentation principale du véhicule (batterie 12 V par exemple) ;
- Initialisation de la communication d'urgence à partir d'une énergie obtenue de la batterie de secours. La communication d'urgence peut alors être transmise grâce à la batterie de secours.

Ce dispositif D peut prendre la forme de circuits imprimés, de tout type d'ordinateur, typiquement implanté dans le boitier de connectivité.

Le dispositif D comprend une mémoire vive 100 pour stocker des instructions pour la mise en œuvre par un processeur 200 d'au moins une étape du procédé tel que décrit ci-avant. Le dispositif comporte aussi une mémoire de masse 300 pour le stockage de données destinées à être conservées après la mise en œuvre du procédé.

Le dispositif D peut en outre comporter un processeur de signal numérique (DSP) 400. Ce DSP 400 reçoit des données pour mettre en forme, démoduler et amplifier, de façon connue en soi ces données.

Le dispositif comporte également une interface d'entrée 500 pour la réception des données mises en œuvre par du procédé et une interface de sortie 600 pour la transmission des données mises en œuvre par le procédé.

La présente invention ne se limite pas aux formes de réalisation décrites ci-avant à titre d'exemples ; elle s'étend à d'autres variantes.

Ainsi, il a été décrit un mode de réalisation dans lequel l'invention était mise en œuvre pour un boitier de connectivité présentant une forme sensiblement plate. L'invention peut toutefois être mis en œuvre pour tout type de boitier, par exemple de forme cubique.

## Revendications

1. Véhicule terrestre à moteur comportant :
- un siège conducteur et un siège passager ;
- une console centrale comprise entre le siège conducteur et le siège passager ;
- un boitier de connectivité (7) compris à l'intérieur de la console centrale ;
- un support (3) du boitier de connectivité fixé sur un plancher du véhicule et compris à l'intérieur de la console centrale ;
dans lequel le boitier de connectivité et le support sont configuré pour être fixés l'un à l'autre, et dans lequel le support comporte une platine (1) configurée pour recevoir une batterie de secours configurée pour alimenter le boitier de connectivité en énergie.

2. Véhicule selon la revendication 1, dans lequel la console centrale comporte en outre un conduit de climatisation (9), situé au-dessus du boitier de connectivité.

3. Véhicule selon l'une des revendications précédentes, dans lequel la batterie de secours est configurée pour que l'alimentation en énergie du boitier de connectivité par la batterie de secours génère suffisamment d'énergie pour que le boitier de connectivité transmette une communication d'urgence à un centre d'appel d'urgence.

4. Véhicule selon la revendication 3, dans lequel la communication d'urgence est un message d'urgence comportant l'un au moins des éléments suivants :
- une localisation du véhicule ;
- un type du véhicule.

5. Procédé d'émission d'une communication d'urgence depuis un véhicule terrestre à moteur selon l'une des revendications 3 ou 4, comportant les étapes de :
- détection d'un défaut de fonctionnement d'une source d'alimentation principale du véhicule ;
- initialisation de la communication d'urgence à partir d'une énergie obtenue de la batterie de secours.

## Patentansprüche

1. Motorisiertes Landfahrzeug bestehend aus:
- ein Fahrersitz und ein Beifahrersitz;
- eine Mittelkonsole zwischen Fahrersitz und Beifahrersitz;
- eine Anschlussbox (7) in der Mittelkonsole;
- eine Halterung (3) für die Anschlussbox, die am Fahrzeugboden befestigt und in der Mittelkonsole integriert ist;
bei der die Anschlussbox und die Halterung so konfiguriert sind, dass sie fest miteinander verbunden sind, und bei der die Halterung eine Platte (1) umfasst, die zur Aufnahme einer Backup-Batterie konfiguriert ist, die die Anschlussbox mit Strom versorgt.

2. Fahrzeug nach Anspruch 1, bei dem die Mittelkonsole ferner einen Klimaanlagenkanal (9) umfasst, der oberhalb der Anschlussbox angeordnet ist.

3. Fahrzeug nach einem der vorhergehenden Ansprüche, wobei die Notstrombatterie so konfiguriert ist, dass die Stromversorgung der Anschlussbox durch die Notstrombatterie ausreichend Leistung erzeugt, damit die Anschlussbox eine Notfallmeldung an eine Notrufzentrale senden kann.

4. Fahrzeug nach Anspruch 3, wobei die Notfallkommunikation eine Notfallmeldung ist, die mindestens eines der folgenden Elemente umfasst:
- Fahrzeugstandort;
- ein Fahrzeugtyp.

5. Verfahren zur Übermittlung einer Notmeldung von einem Kraftfahrzeug nach Anspruch 3 oder 4, umfassend die folgenden Schritte:
- Erkennung einer Fehlfunktion in der primären Stromversorgung des Fahrzeugs;
- Einleitung der Notfallkommunikation unter Verwendung von Energie aus der Notstrombatterie.

## Claims

1. Motorized land vehicle comprising:
- a driver's seat and a passenger seat;
- a central console located between the driver's seat and the passenger's seat;
- a connectivity box (7) included inside the center console;
- a support (3) for the connectivity box fixed to a floor of the vehicle and included inside the center console;
in which the connectivity box and the support are configured to be fixed to each other, and in which the support includes a plate (1) configured to receive a backup battery configured to supply power to the connectivity box.

2. Vehicle according to claim 1, in which the central console further comprises an air conditioning duct (9), located above the connectivity box.

3. Vehicle according to any one of the preceding claims, wherein the backup battery is configured so that the power supply to the connectivity box by the backup battery generates sufficient power for the connectivity box to transmit an emergency communication to an emergency call center.

4. Vehicle according to claim 3, wherein the emergency communication is an emergency message comprising at least one of the following elements:
- vehicle location;
- a type of vehicle.

5. A method for transmitting an emergency communication from a motor vehicle according to claim 3 or 4, comprising the steps of:
- detection of a malfunction in a primary power supply of the vehicle;
- initiation of emergency communication using energy obtained from the backup battery.
